Europäisches Patentamt

European Patent Office

Office européen des brevets

(11) Numéro de publication : **0 191 660**
**B1**

(12) # FASCICULE DE BREVET EUROPÉEN

(45) Date de publication du fascicule du brevet :
27.07.88

(51) Int. Cl.⁴ : **F 16 L 23/02**

(21) Numéro de dépôt : 86400042.7

(22) Date de dépôt : 09.01.86

(54) **Dispositif de jonction entre deux tuyaux comportant des pieces d'appui escamotables.**

(30) Priorité : 18.01.85 FR 8500722

(43) Date de publication de la demande :
20.08.86 Bulletin 86/34

(45) Mention de la délivrance du brevet :
27.07.88 Bulletin 88/30

(84) Etats contractants désignés :
**BE CH DE GB IT LI NL**

(56) Documents cités :
**FR-A- 1 184 262**
**FR-A- 2 141 340**
**US-A- 2 536 602**
**US-A- 3 165 341**

(73) Titulaire : **COMMISSARIAT A L'ENERGIE ATOMIQUE**
**31/33, rue de la Fédération**
**F-75015 Paris (FR)**

(72) Inventeur : **Chaix, Jean-Edmond**
**Les Pinchinades la Pinède**
**F-04860 Pierrevert (FR)**
Inventeur : **Metteey, Michel**
**5 Résidence le Surville**
**F-13510 Eguilles (FR)**

(74) Mandataire : **Mongrédien, André et al**
**c/o BREVATQME 25, rue de Ponthieu**
**F-75008 Paris (FR)**

## Description

La présente invention a pour objet un dispositif de jonction entre deux tuyaux comportant des pièces d'appui escamotables. Cette invention est utilisable pour tous les raccordements de tuyaux, quelle que soit la forme des collets.

Le raccordement entre deux tuyaux fait l'objet d'une attention toute particulière dans certaines applications. Ainsi, dans un générateur de vapeur par exemple, les tuyaux sont soumis à des contraintes thermiques et mécaniques qui sont en partie transmises au dispositif de jonction entre deux tuyaux consécutifs.

Par ailleurs, ce dispositif doit assurer une liaison fiable et étanche dans le cadre des spécifications (température, pression,...) imposées.

Les dispositifs de jonction habituellement utilisés comprennent deux collets rapportés en bout de chaque tuyau. Ces collets possèdent chacun un épaulement entre lesquels est disposé un joint d'étanchéité. La forme des épaulements dépend des joints qu'ils sont destinés à recevoir. Deux brides aptes à venir en appui contre les épaulements sont percées de trous traversés par des moyens de serrage (boulons, tirants,...). Ceux-ci exercent une force tendant à rapprocher les deux brides et à comprimer le joint.

Avec ce type de dispositif, les brides doivent être mises en place sur les tuyaux avant la fixation des collets en bout de tuyau, car le diamètre intérieur des brides est nécessairement inférieur au diamètre extérieur des collets. Pour la même raison, le démontage de la bride nécessite la découpe des collets, ce qui est préjudiciable à la fiabilité de l'installation et coûteux.

La présente invention a justement pour objet un dispositif de jonction entre deux tuyaux pourvus chacun d'un collet de diamètre extérieur donné, apte à comprimer un joint d'étanchéité entre ces deux collets, ce dispositif comportant deux brides percées de trous alignés et de diamètre intérieur inférieur au diamètre extérieur des collets, de façon à pouvoir venir en appui contre ces derniers, et des moyens de serrage traversant les trous formés dans les brides afin d'appliquer sur celles-ci une force qui tend à les rapprocher et à comprimer le joint entre les collets, et permettant de pallier les inconvénients précédemment mentionnés.

Plus précisément, au moins l'une des brides comprend une bague cylindrique externe, de diamètre intérieur supérieur au diamètre extérieur des collets, et des pièces d'appui disposées à l'intérieur de ladite bague et dans lesquelles sont formés lesdits trous, chaque pièce d'appui étant articulée sur une face latérale de la bague afin de pouvoir basculer une position d'effacement dans laquelle le diamètre interne de la bride correspond sensiblement au diamètre interne de la bague.

Avantageusement, chaque pièce d'appui est articulée sur la bague autour d'un axe disposé sensiblement tangentiellement à la face périphérique interne de la bague.

De façon avantageuse, les pièces d'appui sont composées de deux séries de pièces d'appui disposées alternativement, les pièces d'appui de la première série comportant des faces latérales perpendiculaires audit axe et les pièces d'appui de la seconde série comportant des faces latérales parallèles auxdites faces latérales des pièces d'appui voisines de la première série.

Le dispositif selon l'invention est donc démontable sans nécessiter la découpe des collets, il permet de plus l'utilisation de collets « tirés » de la masse des tuyaux lors de la fabrication de ces tuyaux, les brides étant disposées ensuite derrière les collets après basculement desdites pièces d'appui par dessus l'épaulement des collets.

De préférence, les pièces d'appui sont articulées soit sur la face latérale de la bague en vis-à-vis de l'autre bride, soit sur la face latérale de la bague opposée à l'autre bride.

De préférence, les moyens de serrage comprennent des tirants enfilés dans les trous des brides ou des tirants vissés dans les trous de l'une des brides.

D'autres avantages et caractéristiques de l'invention ressortiront plus précisément de la description qui suit, donnée à titre explicatif mais nullement limitatif, en référence aux figures annexées sur lesquelles :

la figure 1 représente, en coupe partielle, un premier mode préféré de réalisation du dispositif selon l'invention,

la figure 2 représente, en coupe partielle, un second mode de réalisation selon l'invention,

la figure 3 représente en coupe suivant le plan AA de la figure 1, la bride du dispositif située le plus près du plan AA, et plus particulièrement, les pièces d'appui et leur articulation, et

la figure 4 est une vue comparable à la figure 3 représentant une variante de réalisation dans laquelle la bride représentée du dispositif comprend des pièces d'appui différentes.

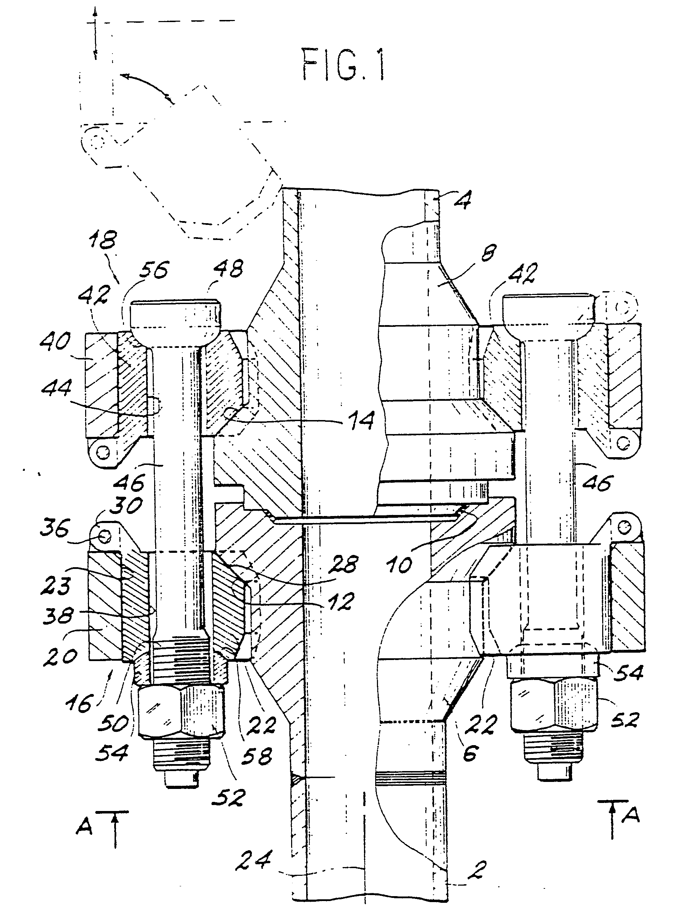

Le dispositif de jonction selon l'invention est représenté sur la figure 1 selon un mode préféré de réalisation.

Ce dispositif permet le raccordement de deux tuyaux 2 et 4. Ces tuyaux 2, 4 sont pourvus à leur extrémité de deux collets 6, 8 respectivement. Sur la figure 1, deux types de collets sont représentés. Le collet 6 est une pièce soudée à l'extrémité du tuyau 2, alors que le collet 8 est « tiré » de la masse du tuyau 4 lors de sa fabrication. On peut bien sûr envisager deux collets soudés aux extrémités des tuyaux ou deux collets tirés de la masse des tuyaux. Les extrémités en vis-à-vis des collets 6, 8 s'emboîtent de telle sorte qu'un joint d'étanchéité 10 est logé entre ces deux extrémités. La forme des extrémités des collets dépend du type de joint utilisé, sur la figure 1 un joint « en S ».

La surface latérale du collet 6 possède un épaulement 12 de forme tronconique orienté vers le tuyau 2. Le collet 8 possède également un épaulement 14 tronconique orienté vers le tuyau 4.

Deux brides 16, 18 susceptibles de venir en appui contre lesdits épaulements 12, 14 sont placées respectivement autour des collets 6, 8.

La bride 16 comporte une bague cylindrique externe 20 dont le diamètre intérieur est supérieur au diamètre extérieur du collet 6.

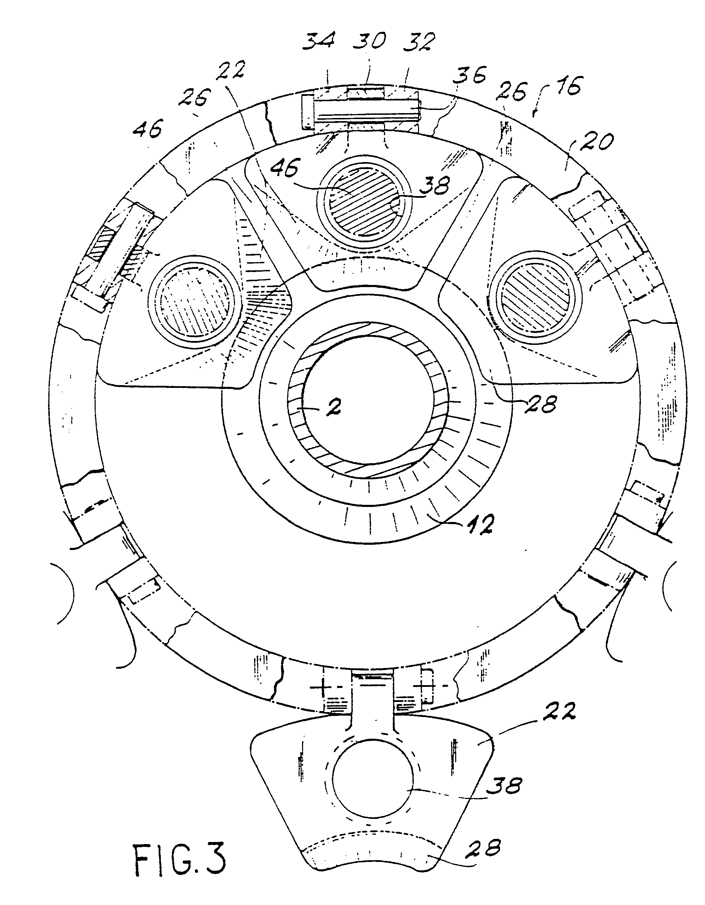

Sur la figure 3, la bride 16 est représentée selon le plan de coupe AA de la figure 1. Des pièces d'appui 22 sont disposées à l'intérieur de la bague 20. Ces pièces d'appui 22 ont une forme de secteur cylindrique, le rayon de courbure de leur face extérieure correspondant au rayon intérieur de la bague 20, leur permettant de s'appliquer contre la face intérieure 23 de cette bague 20. Ces pièces 22 sont de plus découpées radialement par rapport à un axe 24 défini par les tuyaux 2, 4 et les collets 6, 8 permettant ainsi l'existence d'un jeu 26 entre ces pièces 22. La face intérieure de ces pièces d'appui 22 possède un épaulement 28 tronconique apte à s'appliquer contre l'épaulement 12 tronconique du collet 6.

Chacune des pièces 22 est pourvue d'une languette 30 en saillie sur une de leurs faces latérales et dirigée vers la bague 20. Cette languette 30 vient s'intercaler entre deux chapes 32, 34 érigées sur la face latérale correspondante de la bague 20. Un axe 36 est disposé dans un trou percé selon un même alignement dans les deux chapes 32, 34 et dans la languette 30. De préférence, ledit trou et donc l'axe 36 sont perpendiculaires à l'axe 24 et disposés tangentiellement à la face intérieure 23 de la bague 20.

Les pièces d'appui sont percées de trous 38 parallèlement audit axe 24. Avantageusement ces trous 38 et les languettes 30 sont alignés radialement par rapport à l'axe 24.

La bride 18 est semblable à la bride 16 précédemment décrite. Elle possède une bague externe 40, des pièces d'appui 42 articulées sur une des faces latérales de cette bague 40 et aptes à s'appliquer contre l'épaulement 14 du collet 8 correspondant. La bride 18 comporte des trous 44 disposés sensiblement selon un même alignement avec les trous 38.

Les trous alignés 38, 44 sont traversés par des tirants 46 comportant chacun à une extrémité une tête 48 apte à venir en appui contre la face latérale correspondante de la pièce d'appui 42 et à l'autre extrémité un bout fileté 50. Un écrou 52 est vissé sur ce bout fileté 50 et vient s'appliquer contre la face latérale correspondante de la pièce d'appui 22 par l'intermédiaire d'une rondelle 54.

Avantageusement, les surfaces d'appui 56, 58 entre la tête 48 et la pièce d'appui 42 et entre la rondelle 54 et la pièce d'appui 22 sont sphériques. Ces surfaces d'appui 56, 58 associées au jeu existant entre les trous 38, 44 et les tirants 46 correspondant permettent d'exercer sur ces tirants un effort purement axial sans risque de flexion.

Lors du serrage des tirants 46, les efforts sont transmis aux pièces d'appui 22, 42, puis aux collets 6, 8 par la coopération des épaulements 12, 14, 28 qui tendent alors à se rapprocher en comprimant le joint d'étanchéité 10. La conicité des épaulements 12, 14, 28 permet un centrage automatique des brides 16, 18.

Les pièces d'appui viennent en appui contre la face interne 23 des bagues 20, 40. Pour que la bague travaille en traction pure et qu'il n'y ait pas de reprise d'effort par les articulations 30, 32, 34, 36, certains jeux sont nécessaires. Un jeu important en rotation doit exister entre l'axe 36 et les chapes 32, 34 alors qu'un guidage précis en translation est nécessaire entre la languette 30 et les chapes 32, 34.

Sur la figure 1, le dispositif de jonction selon l'invention est représenté en position de fonctionnement, c'est-à-dire lorsque les tuyaux 2, 4 sont raccordés. Lors du montage ou du démontage du dispositif, les brides 16, 18 peuvent passer autour des collets 6, 8 en escamotant les pièces d'appui 22, 42 comme le représente partiellement la figure 3 (les trois pièces d'appui 22 au bas de la figure 3). Les pièces d'appui basculent dans une position d'effacement dans laquelle le diamètre interne des brides 16, 18 correspond sensiblement au diamètre interne des bagues 20, 40 lui-même supérieur au diamètre extérieur maximum des collets.

Cette disposition permet donc avantageusement de démonter les brides, pour par exemple les remplacer, sans couper les collets puis les ressouder.

On peut de plus utiliser un collet « tiré » de la masse du tuyau, comme le collet 8 du tuyau 4, pour lequel une bride classique est difficilement utilisable. Le montage de la bride correspondante 18 s'effectue par effacement des pièces d'appui puis par remise en place de ces pièces. L'utilisation d'un collet de ce type est très avantageuse au niveau de l'encombrement et de plus évite les soudures qui demandent des opérations de contrôle, de reprise, de traitements thermiques,... toujours onéreuses et longues.

De plus, le dispositif selon l'invention permet une répartition des efforts avantageuse pour la fiabilité ; les pièces d'appui travaillant en compression pure et la bague en traction pure, alors que les brides des dispositifs classiques travaillent également en flexion, ce qui est nettement moins favorable.

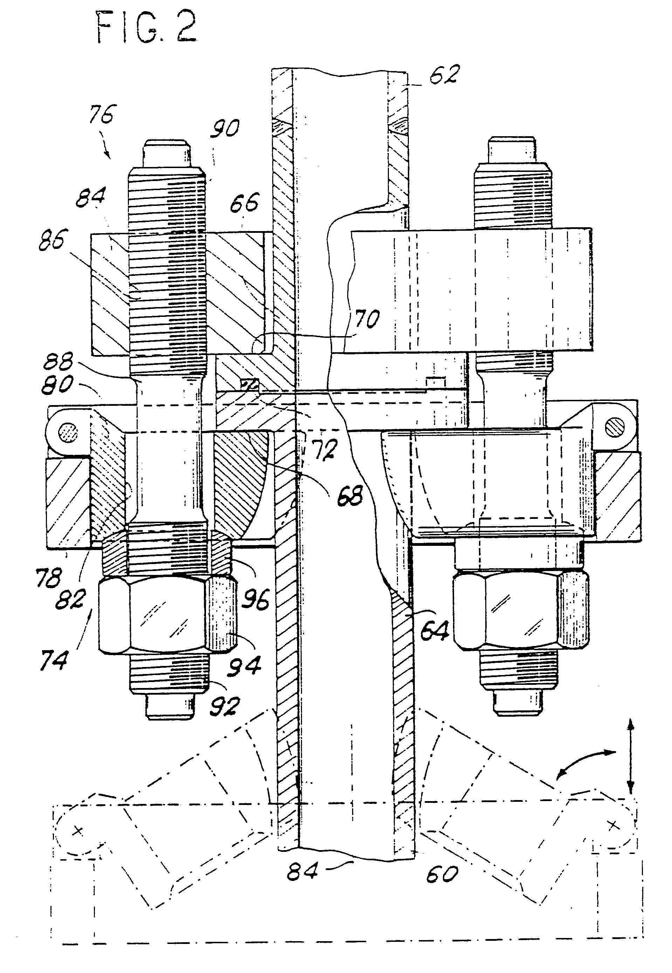

Un second mode de réalisation du dispositif de jonction entre deux tuyaux 60, 62 selon l'invention est représenté sur la figure 2.

Les extrémités des tuyaux 60, 62 sont pourvues de collets 64, 66 respectivement de forme classique. Ces collets 64, 66 comportent chacun un épaulement droit 68, 70. Les extrémités des collets 64, 66 sont susceptibles de se rapprocher en comprimant un joint d'étanchéité 72, par exemple torique.

Deux brides 74, 76 aptes à venir en appui contre les épaulements 68, 70 sont disposées autour des collets 64, 66.

La bride 74 est escamotable et semblable à la bride 16 de la figure 1. Elle comporte une bague cylindrique externe 78 sur laquelle sont articulées des pièces d'appui 80 aptes à venir en appui contre l'épaulement 68 du collet 64 et percées de trous 82 parallèles à l'axe 84 défini par les tuyaux 60, 62 et les collets 64, 66.

La bride 76 est de type classique, c'est-à-dire qu'elle comprend une bague cylindrique 84, percée de trous 86 alignés avec les trous 82 de la bride 74, apte à venir en appui contre l'épaulement 70 du collet 66.

L'exemple de réalisation représenté sur la figure 2 comprend une bride escamotable 74 et une bride classique 76, mais on peut évidemment envisager d'utiliser deux brides escamotables 74.

Des tirants 88 sont disposés dans les trous alignés 82, 84. Le trou 86 est par exemple fileté et chaque tirant 88 comprend à chaque extrémité un bout fileté 90, 92. Le bout fileté 90 est vissé dans le trou 86 et un écrou 94 est vissé sur le bout fileté 92 de manière à serrer une rondelle 96 contre la pièce d'appui 80 correspondante. Le serrage des tirants 88 permet d'appliquer les brides 74, 76 contre les épaulements 68, 70 et de comprimer le joint d'étanchéité 72.

Le dispositif représenté sur la figure 2 est un exemple de la combinaison possible entre une bride classique 76 et une bride selon l'invention 74. La bride classique correspond alors par exemple à l'utilisation d'un collet classique 66 soudé à l'extrémité du tuyau 62 avec tous les désavantages liés à la soudure. La bride escamotable 74 correspond par exemple à l'utilisation d'un collet 64 « tiré » de la masse du tuyau 60. Les pièces d'appui 80 de cette bride 74 basculent selon une position d'effacement (en traits mixtes dans le bas de la figure 2) dans laquelle le diamètre interne de la bride 74 correspond sensiblement au diamètre interne de la bague 78 lui-même supérieur au diamètre extérieur du collet 64. Le montage et le démontage de la bride 74 est donc possible sans couper le collet 64.

On peut bien sûr envisager un type de tirants identique à celui du premier mode de réalisation (figure 1) ou de type analogue.

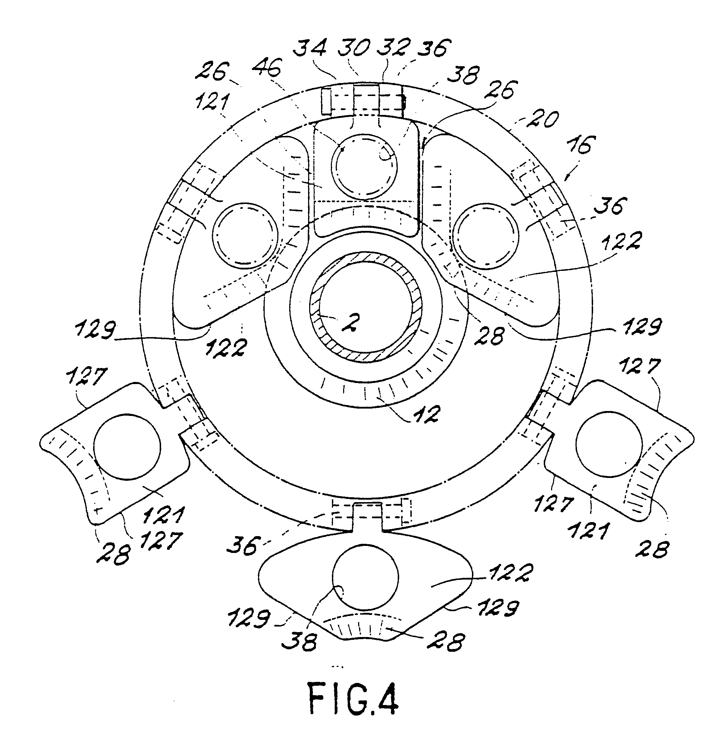

Une variante de réalisation de la bride du dispositif selon la figure 3 est représentée sur la figure 4.

Les pièces ou parties du dispositif représenté sur la figure 4 similaires aux pièces ou parties du dispositif représenté sur la figure 3 ont des références identiques.

Des pièces d'appui sont disposées à l'intérieur de la bague 20 de la bride 16. Ces pièces d'appui se décomposent en deux séries de pièces d'appui disposées alternativement. Les pièces d'appui 121 de la première série comportent des faces latérales 127 perpendiculaires à l'axe 36 de l'articulation 30, 32, 34, 36 décrite précédemment à l'aide de la figure 3. Les pièces d'appui 122 de la seconde série comportent des faces latérales 129 parallèles auxdites faces latérales 127 des pièces d'appui 121 voisines de la première série.

Cette disposition permet d'obtenir, en basculant d'abord les pièces d'appui 121 de la première série, un déplacement des faces latérales 127 des pièces d'appui 121 parallèlement aux faces latérales 129 des pièces d'appui 122.

En conséquence, on réduit de façon avantageuse le jeu 26 existant entre les pièces d'appui.

Les tirants 46 sont enfilés dans les trous 38 des pièces d'appui 121, 122 de la même façon que pour le dispositif de la figure 3.

Bien entendu, la description ci-dessus n'a été donnée qu'à titre d'exemple, toutes modifications dans les formes de réalisation peuvent être envisagées sans modifier le principe fondamental de l'invention.

On peut par exemple envisager des formes de collets très différentes suivant les conditions de fonctionnement, le joint d'étanchéité et les brides correspondantes utilisés. On peut envisager des collets soudés ou des collets tirés de la masse.

Les articulations 30, 32, 34, 36 des pièces d'appui peuvent être situées sur l'une quelconque des faces latérales des brides. Une articulation disposée côté tuyau est représentée sur la figure 1 en traits mixtes.

**Revendications**

1. Dispositif de jonction entre deux tuyaux (2, 4 ; 60, 62) pourvus chacun d'un collet (6, 8 ; 64, 66) de diamètre extérieur donné, apte à comprimer un joint d'étanchéité (10 ; 72) entre ces deux collets, ce dispositif comportant deux brides (16, 18 ; 74, 76) percées de trous alignés (38, 44 ; 82, 86) et de diamètre intérieur inférieur au diamètre extérieur des collets, de façon à pouvoir venir en appui contre ces derniers, et des moyens de serrage (46 ; 88) traversant les trous (38, 44 ; 82, 86) formés dans les brides afin d'appliquer sur celles-ci une force qui tend à les rapprocher et à comprimer le joint entre les collets, caractérisé en ce qu'au moins l'une desdites brides comprend une bague cylindrique externe (20, 40 ; 78), de diamètre intérieur supérieur au diamètre extérieur des collets et des pièces d'appui (22, 42 ; 80) disposées à l'intérieur de ladite bague et dans lesquelles sont formés lesdits trous, chaque pièce d'appui étant articulée sur une face latérale de la bague afin de pouvoir basculer dans une position d'effacement dans laquelle le diamètre interne de la bride correspond sensiblement au diamètre interne de la bague.

2. Dispositif selon la revendication 1, caractérisé en ce que chaque pièce d'appui est articulée sur la bague autour d'un axe (36) disposé sensiblement tangentiellement à la face périphérique interne de la bague.

3. Dispositif selon la revendication 2, caractérisé en ce que les pièces d'appui sont composées de deux séries de pièces d'appui disposées alternativement, les pièces d'appui (121) de la première série comportant des faces latérales (127) perpendiculaires audit axe (36) et les pièces d'appui (122) de la seconde série comportant des faces latérales (129) parallèles aux faces latérales (127) des pièces d'appui (121) voisines de la première série.

4. Dispositif selon l'une quelconque des revendications 1 à 3, caractérisé en ce que les pièces d'appui (22, 42 ; 80) sont articulées sur la face latérale de la bague d'une bride en vis-à-vis de l'autre bride.

5. Dispositif selon l'une quelconque des revendications 1 à 3, caractérisé en ce que les pièces d'appui sont articulées sur la face latérale de la bague d'une bride opposée à l'autre bride.

6. Dispositif selon l'une quelconque des revendications 1 à 5, caractérisé en ce que lesdits moyens de serrage comprennent des tirants (46) composés d'une tige cylindrique munie d'une tête (48) susceptible de venir en appui sur une des brides (18) et d'un bout fileté (50) sur lequel est vissé un écrou (52), une rondelle (54) étant intercalée entre cet écrou et l'autre bride (16).

7. Dispositif selon la revendication 6, caractérisé en ce que les surfaces d'appui (56, 58) de la tête (48) et de la rondelle (54) sur les brides respectives sont sphériques.

8. Dispositif de jonction selon l'une quelconque des revendications 1 à 7, caractérisé en ce qu'au moins un desdits trous (86) d'une des brides (84) est fileté et que le moyen de serrage correspondant comprend une tige (88) filetée aux deux extrémités, l'une des extrémités (90) étant vissée dans le trou fileté (86), un écrou (94) étant vissé sur l'autre extrémité (92) et une rondelle (96) étant intercalée entre cet écrou et l'autre bride (74) correspondante.

9. Dispositif selon la revendication 8, caractérisé en ce que la surface d'appui entre la rondelle (96) et la bride (74) correspondante est sphérique.

## Claims

1. Joining means between two pipes (2, 4 ; 60, 62), each of which is provided with a collar (6, 8 ; 64, 66) having a given external diameter and able to compress a gasket (10 ; 72) between these two collars, said means having two flanges (16, 18 ; 74, 76) perforated with aligned holes (38, 44 ; 82, 86) and having an internal diameter smaller than the external diameter of the collars, so as to be able to bear against the latter, as well as tightening means (46 ; 88) traversing the holes (38, 44 ; 82, 86) formed in the flanges in order to apply thereto a force tending to move them together and compress the gasket between the collars, characterized in that at least one of said flanges comprises an external cylindrical ring (20, 40 ; 78) having an internal diameter larger than the external diameter of the collars and bearing parts (22, 42 ; 80) positioned within said ring and in which are formed said holes, each bearing part being articulated on a lateral face of the ring, so as to be able to tilt into an overriding position in which the internal diameter of the flange substantially corresponds to the internal diameter of the ring.

2. Means according to claim 1, characterized in that each bearing part is articulated on the ring about a spindle (36) arranged substantially tangentially to the internal peripheral face of the ring.

3. Means according to claim 2, characterized in that the bearing parts are formed from two rows of alternately arranged bearing parts, the bearing parts (121) of the first row having lateral faces (127) perpendicular to said spindle (36) and the bearing parts (122) of the second row have laterla faces (129) parallel to the lateral faces (127) of the adjacent bearing parts (121) of the first row.

4. Means according to any one of the claims 1 to 3, characterized in that the bearing parts (22, 42 ; 80) are articulated on the lateral face of the ring of one flange facing the other flange.

5. Means according to any one of the claims 1 to 3, characterized in that the bearing parts are articulated on the lateral face of the ring of one flange opposite to the other flange.

6. Means according to any one of the claims 1 to 5, characterized in that said tightening means incorporate tie rods (46) formed from a cylindrical rod provided with a head (48), which can bear on one of the flanges (18) and a threaded end fitting (50) onto which is screwed a nut (52), a washer (54) being inserted between said nut and the other flange (16).

7. Means according to claim 6, characterized in that the bearing surfaces (56, 58) of the head (48) and the washer (54) on the respective flanges are spherical.

8. Means according to any one of the claims 1 to 7, characterized in that at least one of the said holes (86) of one of the flanges (84) is threaded and the corresponding tightening means comprises a rod (88) which is threaded at both ends, one of the ends (90) being screwed into the threaded hole (86), a nut (94) being screwed onto the other end (92) and a washer (96) being inserted between said nut and the corresponding other flange (74).

9. Means according to claim 8, characterized in that the bearing surface between the washer (96) and the corresponding flange (74) is spherical.

## Patentansprüche

1. Verbindungsvorrichtung zwischen zwei jeweils mit einem Bund (6, 8 ; 64, 66) mit gegebenem Außendurchmesser versehenen Rohren (2, 4 ; 60, 62), welche eine Dichtung (10 ; 72) zwischen diesen zwei Bünden zusammendrücken kann, wobei diese Vorrichtung zwei mit ausgerichteten Löchern (38, 44 ; 82, 86) durchbohrte Flanschringe (16, 18 ; 74, 76), die einen kleineren Innendurchmesser als der Außendurchmesser der Bünde aufweisen, so daß sie in Anlage gegen diese Letzteren kommen können, und Klemmittel (46 ; 88) umfaßt, die die in den Flanschringen ausgebildeten Löcher (38, 44 ; 82, 86) durchqueren, um auf diese eine Kraft auszuüben, die danach strebt, sie anzunähern und die Dichtung zwischen den Bünden zusammenzudrücken, dadurch gekennzeichnet, daß wenigstens einer der Flanschringe einen äußeren, zylindrischen Ring (20, 40 ; 78) mit größerem Innendurchmesser als der Außendurchmesser der Bünde aufweist und Andruckkörper (22, 42 ; 80) in dem Inneren des genannten Ringes angeordnet und in ihnen die genannten Löcher ausgebildet sind, wobei jeder Andruckkörper an einer Seitenfläche des Rings verschwenkbar ist, so daß er in eine zurückgenommene Position kippen kann, in der der Innendurchmesser des Flanschrings im wesentlichen dem Innendurchmesser des Ringes entspricht.

2. Vorrichtung nach Anspruch 1, dadurch gekennzeichnet, daß jeder Andruckkörper an dem Ring um eine Achse (36) verschwenkbar ist, die im wesentlichen tangential zu der inneren Umfangsfläche des Rings angeordnet ist.

3. Vorrichtung nach Anspruch 2, dadurch gekennzeichnet, daß die Andruckkörper aus zwei Reihen von abwechselnd angeordneten Andruckkörpern zusammengesetzt sind, die Andruckkörper (121) der ersten Reihe zu der genannten Achse (36) senkrechte Seitenflächen (127) aufweisen und die Andruckkörper (122) der zweiten Reihe Seitenflächen (129) aufweisen, die parallel zu den Seitenflächen (127) der benachbarten Andruckkörper (121) der ersten Reihe verlaufen.

4. Vorrichtung nach irgendeinem der Ansprüche 1 bis 3, dadurch gekennzeichnet, daß die Andruckkörper (22, 42 ; 80) an der Seitenfläche des Rings eines Flanschrings verschwenkbar sind, die dem anderen Flanschring gegenüberliegt.

5. Vorrichtung nach irgendeinem der Ansprüche 1 bis 3, dadurch gekennzeichnet, daß die Andruckkörper an der Seitenfläche des Rings eines Flanschrings verschwenkbar sind, die zu dem anderen Flanschring entgegengesetzt ist.

6. Vorrichtung nach irgendeinem der Ansprüche 1 bis 5, dadurch gekennzeichnet, daß die Klemmittel Spannstangen (46) umfassen, die aus einer zylindrischen Stange bestehen, welche mit einem Kopf (48), der in Anlage auf einen der Flanschringe (18) gebracht werden kann, und einem Gewindeabschnitt (50) versehen sind, auf den eine Mutter (52) aufgeschraubt ist, wobei eine Beilagscheibe (54) zwischen diese Mutter und den anderen Flanschring (16) eingefügt ist.

7. Vorrichtung nach Anspruch 6, dadurch gekennzeichnet, daß die Anlageflächen (56, 58) des Kopfes (48) und der Beilagscheibe (54) an den Flanschringen jeweils sphärisch sind.

8. Verbindungsvorrichtung nach irgendeinem der Ansprüche 1 bis 7, dadurch gekennzeichnet, daß wenigstens eines der Löcher (86) eines der Flanschringe (84) mit einem Gewinde versehen ist und das entsprechende Klemmittel eine an ihren zwei Enden mit einem Gewinde versehene Stange (88) aufweist, wobei eines der Enden (90) in das Gewindeloch (86) eingeschraubt ist, eine Mutter (94) auf das andere Ende (92) aufgeschraubt ist und eine Beilagscheibe (96) zwischen diese Mutter und dem anderen entsprechenden Flanschring (74) eingefügt ist.

9. Vorrichtung nach Anspruch 8, dadurch gekennzeichnet, daß die Anlagefläche zwischen der Mutter (96) und dem entsprechenden Flanschring (74) sphärisch ist.

# FIG.1

# FIG. 2

FIG.3

FIG.4